# EUROPÄISCHE PATENTSCHRIFT

(11) **EP 3 206 975 B1**
(45) Veröffentlichungstag und Bekanntmachung des Hinweises auf die Patenterteilung: **22.08.2018**
(21) Anmeldenummer: 15793678.2
(22) Anmeldetag: 07.10.2015
(51) Int. Cl.: B65G 51/06

(54) **ROHRPOSTBÜCHSE**
PNEUMATIC TUBE CAPSULE
CARTOUCHE-FURET

(30) Priorität: 13.10.2014 AT 507292014
(43) Veröffentlichungstag der Anmeldung: 23.08.2017
(73) Patentinhaber: Hanazeder, Erwin, 4912 Neuhofen im Innkreis (AT)
(72) Erfinder: Hanazeder, Erwin, 4912 Neuhofen im Innkreis (AT)
(74) Vertreter: Patentanwaltskanzlei Hübscher
(86) Internationale Anmeldenummer: PCT/AT2015/050248
(87) Internationale Veröffentlichungsnummer: WO 2016/058016

(56) Entgegenhaltungen:
- DE-A1- 3 927 092
- US-A- 3 323 755
- US-A- 3 788 577

## Beschreibung

Die Erfindung bezieht sich auf eine Rohrpostbüchse mit wenigstens einem Deckel, der in einem Lager eines Büchsenkopfs um eine zur Büchsenachse parallele Drehachse zwischen einer Schließstellung und einer Offenstellung schwenkbar gehalten ist und eine Schwenkwelle mit zwei einander gegenüberliegenden Nockenabschnitten aufweist, die mit einer im Büchsenkopf eingespannten, senkrecht zu einer durch die Drehachse des Deckels verlaufenden Durchmesserebene des Büchsenkopfs ausgerichteten Blattfederanordnung zusammenwirken. Eine solche Rohrpostbüchse ist bereits aus US 3 323 755 bekannt.

Um Rohrpostbüchsen in einfacher Weise öffnen zu können, ist es bekannt, den Deckel mit einem Umfangswandabschnitt zu versehen, der einen Umfangsabschnitt des Büchsenkopfs zu einer umlaufenden Umfangswand ergänzt, und um eine zur Büchsenachse parallele Drehachse schwenkverstellbar im Büchsenkopf zu lagern, sodass beim Schließen des Deckels die der Drehachse gegenüberliegende, axial verlaufende Stirnseite des deckelseitigen Umfangswandabschnitts mit der Stirnseite des büchsenkopfseitigen Umfangswandabschnitts über eine Nut-Federanordnung verbunden wird, während die kreisförmige Deckeldecke den freien Umfangsrand des büchsenkopfseitigen Umfangswandabschnitts übergreift. Zur Sicherung der Schließstellung und der gegenüber der Schließstellung um 180° versetzten Offenstellung des Deckels ist der Deckel mit einer in einem Lager des Büchsenkopfs gehaltenen Schwenkwelle versehen, die zwei einander diametral gegenüberliegende Nocken aufweist. Da die Schwenkwelle mit ihrem Nockenbereich zwischen zwei parallele, im Büchsenkopf eingespannte Blattfedern greift, die senkrecht zu einer durch die Drehachse des Deckels verlaufenden Durchmesserebene des Büchsenkopfs ausgerichtet sind, wird die Schwenkwelle des Deckels über die Nocken durch die Blattfederanordnung je nach der Drehstellung des Deckels mit einem Drehmoment beaufschlagt, das den Deckel entweder in der anschlagbegrenzten Schließstellung oder in einer Offenstellung hält. Nachteilig ist vor allem, dass bei einem für ein sicheres Schließen erforderlichen Schließmoment eine entsprechend große Öffnungskraft erforderlich wird und dass über die Blattfederanordnung der Deckel nur in einer Anschlaglage festgehalten werden kann.
Ähnliche Nachteile treten bei einer anderen bekannten Rohpostbüchse auf (US 3 323 755). bei der die mit dem Deckel verbundene, im Büchsenkopf drehbar gelagerte Schwenkwelle mit einer auf der Schwenkwelle axial verschiebbar, aber drehfest gehaltenen Nockenhülse versehen ist, die mithilfe einer die Schwenkwelle umschließenden Schraubenfeder axial beaufschlagt wird und mit einer drehfest im Büchsenkopf angeordneten, ringförmigen Nockenbahn zusammenwirkt. Die Sattelform dieser Nockenbahn bestimmt die Schließ- und Offenstellungen, wobei aufgrund der axialen Federbeaufschlagung der Nockenhülse ein Drehmoment auf den Deckel ausgeübt wird, das im Bereich der Schließstellung im Schließsinn und im Bereich der Offenstellung im Öffnungssinn wirkt.
Der Erfindung liegt somit die Aufgabe zugrunde, eine Rohrpostbüchse zu schaffen, bei der der Deckel mit einem geringen Kraftaufwand wahlweise in entgegengesetzten Richtungen zwischen der Schließstellung und der Offenstellung verschwenkt und in diesen Stellungen festgehalten werden kann. Die Aufgabe wird mit der Rohrpostbüchse gemäß Anspruch 1 gelöst. Aufgrund der Maßnahme, die Trennfläche zwischen dem Deckel und dem Büchsenkopf in eine zur Büchsenachse senkrechte Ebene zu verlegen, werden die konstruktiven Voraussetzungen geschaffen, den Deckel in entgegengesetzten Richtungen zwischen der Schließstellung und der Offenstellung zu verschwenken.

Der in der Trennebene zwischen Büchsenkopf und Deckel liegende Schließrand des Deckels deckt in der Schließstellung des Deckels den ebenfalls in der Trennebene liegenden Öffnungsrand des Büchsenkopfs ab. Es muss lediglich dafür gesorgt werden, dass der Deckel in seinen Schließ- und Offenstellungen festgehalten wird. Zu diesem Zweck weist die Schwenkwelle des Deckels zwei einander diametral gegenüberliegende, parallele Abflachungen auf, die senkrecht zu einer durch die Drehachse verlaufenden Durchmesserebene des Deckels steht, sodass die Blattfederanordnung die Schwenkwelle in der Schließ- bzw. Offenstellung festhält, wenn die Blattfederanordnung an den Abflachungen anliegt, sodass zum Ausschwenken des Deckels aus der Schließ- bzw. Offenstellung die Beaufschlagung der Abflachungen durch die Federanordnung überwunden werden muss. Die Haltekraft für die Schließstellung kann vergleichsweise klein ausfallen, weil der Deckel der Rohrpostbüchsen innerhalb der Rohrpostleitungen nicht geöffnet werden kann und aufgrund der Abflachungen der Schwenkwelle des Deckels die Drehlage des Deckels für die Schließ- und Offenstellung mit Hilfe der im Büchsenkopf eingespannten Blattfederanordnung eindeutig festgelegt ist.

Um die Schließ- und Offenstellung über eine Blattfederanordnung festzulegen, braucht die Blattfederanordnung lediglich eine Blattfeder aufzuweisen, die mit einer entsprechenden Vorspannung im axialen Bereich der Abflachungen an der Schwenkwelle des Deckels anliegt. Bessere Konstruktionsbedingungen werden jedoch sichergestellt, wenn die Blattfederanordnung zwei zueinander parallele Blattfedern aufweist, die die Schwenkwelle des Deckels im Axialbereich der Abflachungen zwischen sich aufnehmen, weil in diesem Fall nicht nur das Festhalten der Schwenkwelle in den vorgegebenen Endstellungen verbessert, sondern auch eine Biegebelastung der Schwenkwelle durch die Blattfederanordnung vermieden wird.

Um ein Abheben des zur Büchsenachse senkrecht verlaufenden Schließrands des Deckels vom Öffnungsrand des Büchsenkopfs und die damit verbundene Belastung des Deckellagers zu vermeiden, kann der Büchsenkopf auf der dem Lager für den Deckel diametral gegenüberliegenden Seite einen den Schließrand des geschlossenen Deckels übergreifenden Sicherungsansatz aufweisen. Dieser Sicherungsansatz lässt Raum für die Schwenkbewegung des Deckels und bildet mit einem Überschlagsteil einen axialen Anschlag für den Deckelrand.

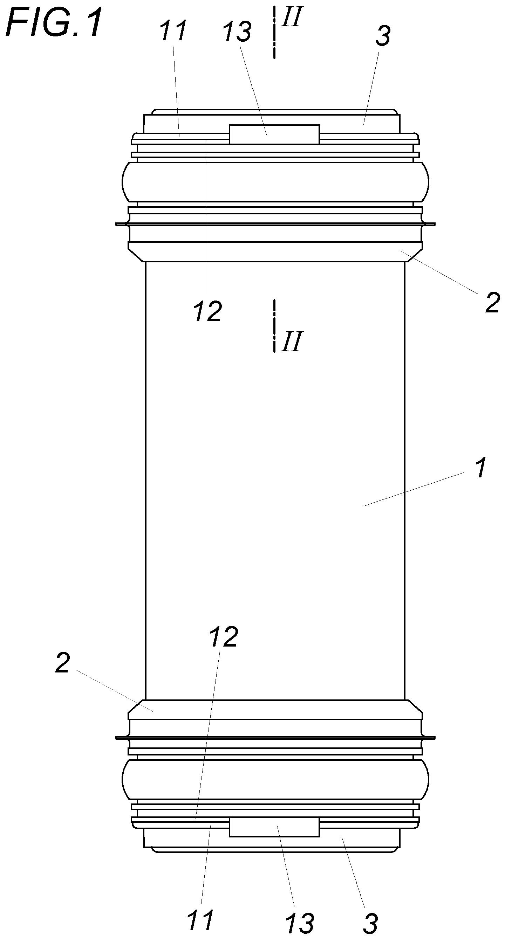

In der Zeichnung ist der Erfindungsgegenstand beispielsweise dargestellt. Es zeigen
- Fig. 1: eine erfindungsgemäße Rohrpostbüchse in einer vereinfachten Seitenansicht,
- Fig. 2: einen Schnitt nach der Linie II-II der Fig. 1 in einem größeren Maßstab und

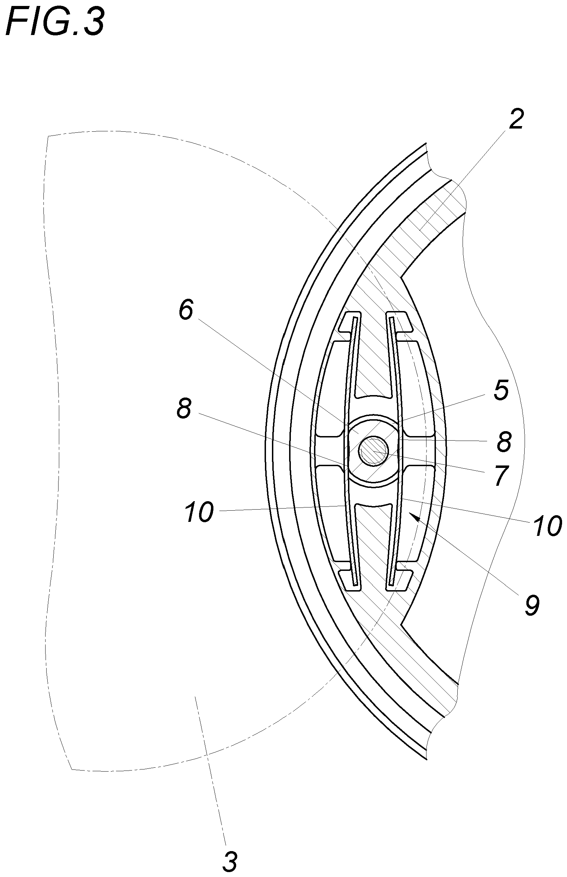

- Fig. 3: einen Schnitt nach der Linie III-III der Fig. 2.

Die Rohrpostbüchse gemäß dem dargestellten Ausführungsbeispiel weist einen zylindrischen Büchsenkörper 1 auf, der an seinen beiden Stirnseiten mit je einem Büchsenkopf 2 versehen ist. Zumindest einer dieser Büchsenköpfe 2 ist mit einem Deckel 3 versehen, der um eine zur Büchsenachse parallele Drehachse 4 verschwenkbar in einem Lager 5 des Büchsenkopfs 2 gehalten ist. Der Deckel 3 ist zu diesem Zweck mit einer Schwenkwelle 6 versehen, die in das Lager 5 eingreift und mit Hilfe einer Schraube 7 axial gegenüber dem Lager 5 festgehalten wird.

Die Schwenkwelle 6 weist zwischen dem Lager 5 und dem Deckel 3 zwei parallele Abflachungen 8 auf, die einander diametral gegenüberliegen, parallel zueinander verlaufen und senkrecht zu einer durch die Drehachse 4 gehenden Durchmesserebene des Deckels 3 stehen. Die Abflachungen 8 wirken mit einer Blattfederanordnung 9 zusammen, die zwei im Büchsenkopf 2 eingespannte Blattfedern 10 umfasst. Da diese Blattfedern 10 senkrecht zu einer durch die Drehachse 4 gehenden Durchmesserebene des Büchsenkopfs 2 ausgerichtet sind, wird die Schwenkwelle 6 über die beiden Abflachungen 8 zwischen den Blattfedern 10 in zwei um 180° gegeneinander versetzten Drehstellungen gehalten, die der Schließstellung und der Offenstellung des Deckels 3 entsprechen.

Da der Deckel 3 einen umlaufenden Schließrand 11 aufweist, der in einer zur Deckelachse senkrechten Ebene liegt und in der Schließstellung den in einer zur Büchsenachse senkrecht liegenden Öffnungsrand 12 des Büchsenkopfs 2 abdeckt, kann der Deckel 3 aus der Schließstellung gegen die Kraft der Blattfedern 10 wahlweise nach beiden Seiten aus der Schließstellung in die Offenstellung verschwenkt werden, in der der Deckel 3 wiederum in seiner Drehstellung zwischen den Blattfedern 10 festgehalten wird. Für das Festhalten des Lagerdeckels 3 in den durch die Schließ- und die Offenstellung gegebenen Endlagen sind vor allem die Übergänge zwischen den Abflachungen 8 und den anschließenden Umfangsabschnitten der Schwenkwelle 6 von Bedeutung, sodass die Form der Abflachungen 8 zwischen diesen Übergängen für die Festlegung der Endlagen des Deckels 3 ohne Bedeutung ist, wenn die Blattfedern 10 in diesem Zwischenbereich zwischen den Übergängen keine Anlage finden.

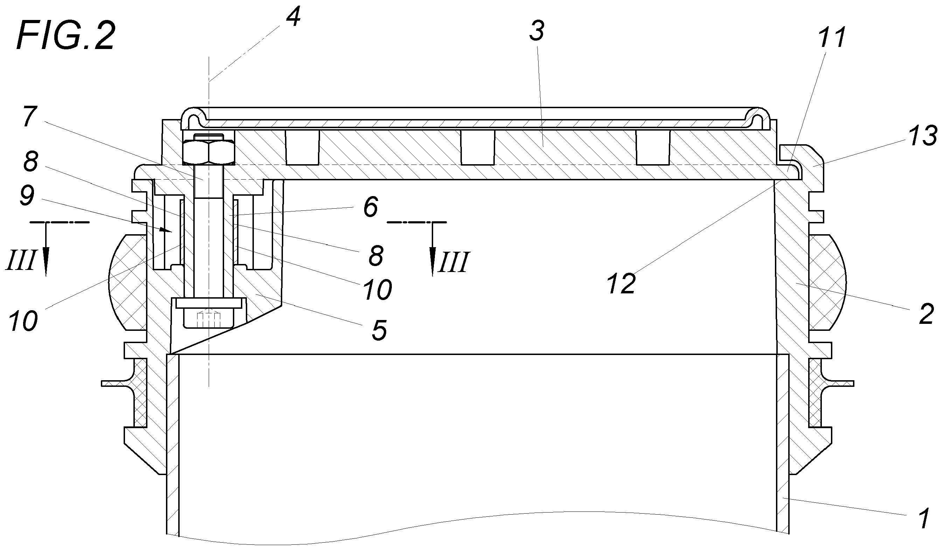

Um ein Abheben des Schließrands 11 des Deckels 3 vom Öffnungsrand 12 des Büchsenkopfs 2 auf der der Drehachse 4 gegenüberliegenden Umfangsseite zu verhindern, kann der Büchsenkopf 2 im Bereich des Öffnungsrands 12 einen Sicherungsansatz 13 aufweisen, der den Schließrand 11 des Deckels 3 übergreift und somit einen axialen Anschlag für den Deckel 3 bildet. Die Schwenkbewegung des Deckels 3 um die Drehachse 4 wird durch diesen Sicherungsansatz 13 nicht beeinträchtigt, wie sich dies aus der Fig. 2 ergibt.

## Patentansprüche

1. Rohrpostbüchse mit wenigstens einem Deckel (3), der in einem Lager (5) eines Büchsenkopfs (2) um eine zur Büchsenachse parallele Drehachse (4) zwischen einer Schließstellung und einer Offenstellung schwenkbar gehalten ist und eine Schwenkwelle (6) mit zwei einander gegenüberliegenden Nockenabschnitten aufweist, die mit einer im Büchsenkopf (2) eingespannten, senkrecht zu einer durch die Drehachse (4) des Deckels (3) verlaufenden Durchmesserebene des Büchsenkopfs (2) ausgerichteten Blattfederanordnung (9) zusammenwirken, **dadurch gekennzeichnet, dass** der Deckel (3) einen umlaufenden, in einer zur Deckelachse senkrechten Ebene liegenden Schließrand (11) bildet und dass die Nockenabschnitte aus zwei parallelen, zu einer durch die Drehachse (4) verlaufenden Durchmesserebene des Deckels (3) senkrechten Abflachungen (8) der Schwenkwelle (6) bestehen.

2. Rohrpostbüchse nach Anspruch 1, **dadurch gekennzeichnet, dass** die Blattfederanordnung (9) zwei zueinander parallele Blattfedern (10) aufweist, die die Schwenkwelle (6) des Deckels (3) im Axialbereich der Abflachungen (8) zwischen sich aufnehmen.

3. Rohrpostbüchse nach Anspruch 1 oder 2, **dadurch gekennzeichnet, dass** der Büchsenkopf (2) auf der dem Lager (5) für den Deckel (3) diametral gegenüberliegenden Seite einen den Schließrand (11) des geschlossenen Deckels (3) übergreifenden Sicherungsansatz (13) aufweist.

## Claims

1. Pneumatic tube capsule comprising at least one lid (3) which is held in a bearing (5) of a capsule head (2) in such a manner as to be able to pivot about an axis of rotation (4), in parallel with the capsule axis, between a closed position and an open position, and has a pivot shaft (6) comprising two mutually opposite cam portions which cooperate with a leaf spring arrangement (9) which is clamped in the capsule head (2) and is oriented perpendicularly to a diameter plane of the capsule head (2) extending through the axis of rotation (4) of the lid (3), **characterised in that** the lid (3) forms a circumferential closing rim (11) located in a plane perpendicular to the lid axis, and **in that** the cam portions consist of two parallel flattened formations (8) of the pivot shaft (6) which are perpendicular to a diameter plane of the lid (3) extending through the axis of rotation (4).

2. Pneumatic tube capsule as claimed in claim 1, **characterised in that** the leaf spring arrangement (9) has two mutually parallel leaf springs (10) which receive the pivot shaft (6) of the lid (3) in the axial region of the flattened formations (8) therebetween.

3. Pneumatic tube capsule as claimed in claim 1 or 2, **characterised in that** the capsule head (2) has, on the side diametrically opposite the bearing (5) for the lid (3), a securing projection (13) which engages over the closing rim (11) of the closed lid (3).

## Revendications

1. Cartouche-furet avec au moins un couvercle (3) qui est maintenu de façon pivotante entre une position fermée et une position d'ouverture dans un palier (5) d'une tête de cartouche (2) sur un axe de rotation (4) parallèle à l'axe de cartouche et avec un arbre de pivotement (6) avec deux sections de came opposées l'une à l'autre qui coopèrent avec un ensemble de ressorts à lame (9), enserré dans la tête de cartouche (2), orienté perpendiculairement à un plan diamétral de la tête de cartouche (2) qui passe par l'axe de rotation (4) du couvercle (3), **caractérisé en ce que** le couvercle (3) forme un bord de fermeture (11) périphérique, situé dans un plan perpendiculaire à l'axe du couvercle et **en ce que** les sections de came sont constituées de deux méplats parallèles (8), perpendiculaires à un plan diamétral du couvercle (3) passant par l'axe de rotation (4), de l'arbre de pivotement.

2. Cartouche-furet selon la revendication 1, **caractérisée en ce que** l'ensemble de ressorts à lame (9) comporte deux ressorts à lame parallèles l'un à l'autre, qui logent entre eux l'arbre de pivotement (6) du couvercle (3) dans la zone axiale des méplats (8).

3. Cartouche-furet selon la revendication 1 ou 2, **caractérisée en ce que** la tête de cartouche (2) comporte sur le côté diamétralement opposé au palier (5) pour le couvercle (3) une saillie de protection (13) mordant le bord de fermeture (11) du couvercle (3) fermé..
